# EUROPEAN PATENT SPECIFICATION

(11) **EP 2 946 670 B1**
(45) Date of publication and mention of the grant of the patent: **23.10.2019**
(21) Application number: 15164501.7
(22) Date of filing: 21.04.2015
(51) Int. Cl.: A23C 20/02, A01J 25/15

(54) **A TOFU PRESS AND METHOD OF REMOVING LIQUID FROM TOFU**
TOFUPRESSE UND VERFAHREN ZUM ENTFERNEN VON FLÜSSIGKEIT AUS TOFU
PRESSE DE TOFU ET PROCÉDÉ D'ÉLIMINATION DE LIQUIDE DE TOFU

(30) Priority: 21.05.2014 GB 201409042
(43) Date of publication of application: 25.11.2015
(73) Proprietor: Tofuture Limited, Amersham, Buckinghamshire HP6 5LD (GB)
(72) Inventor: Kittow, Adam, Amersham, Buckinghamshire HP6 5LD (GB); Andrews, Susanna, Amersham, Buckinghamshire HP6 5LD (GB)
(74) Representative: Handsome I.P. Ltd

(56) References cited:
- WO-A2-2008/118157
- GB-A- 175 941
- JP-U- H0 537 087
- US-A- 2 362 154
- US-A- 5 701 810
- US-A- 5 752 434
- Anonymous: "TM-1202 Tofu Maker and Food Press Kit", www.earthfirstinnovations.com, 17 January 2014 (2014-01-17), pages 1-3, XP055478583, www.earthfirstinnovations.com Retrieved from the Internet: URL:https://web.archive.org/web/2014011716 5757/http://www.earthfirstinnovations.com/ tm1202-tofu-maker.html [retrieved on 2018-05-25]

## Description

The present invention relates generally to a tofu press and method of removing liquid from tofu.

Tofu is made by coagulating soy milk, separating the resultant bean curd from the whey and compressing the bean curds to form a solid mass, usually in the form of a block, known commercially by the name 'tofu'. Tofu is shipped and sold world-wide. In order for the tofu to remain edible, it is typically packaged in sealed containers, often saturated in water, the whey and/or other liquid. Tofu is highly desirable due to its delicate flavour and its ability to absorb other flavours, thereby allowing tofu to be used as a protein substitute in a variety of dishes. One way to infuse tofu with flavour is to marinade it in a liquid of the desired flavour, and allow the marinade to diffuse into the tofu. An alternative method would be to remove a portion of the 'neutral' liquid present in the tofu, and replace it with a flavoursome liquid. In this way, waste of the flavoursome liquid can be minimised; however, it may be appreciated that a user may have difficulty first removing the neutral liquid from the tofu. In addition, reducing the liquid content of the tofu has the advantageous effect of making the tofu firmer and/or less jelly-like, which is a better consistency for cooking. Known bean curd presses fail to be portable, easy and convenient to use, and in particular often include complex moving parts that require relatively frequent maintenance. The present invention seeks to overcome these problems.

JP405037087U discloses: a container body (2); an inner lid (13); an outer lid (1) releasably couplable to the container body (2) by means of a sprung clip (5) with a pawl (4) for engaging tab (7), and a plate spring (15) arranged between the inner lid (13) and outer lid (1) to bias the inner lid (13) and outer lid (1) apart.

WO 2008/118157 A2 discloses: an apparatus and a method for removing excess water from a block of tofu, the apparatus comprising a pair of flat plate members which are connected through biasing means, wherein said pair of flat plate members is engaged through a pair of arm like projections or pivotable latch members to an open top container for holding the block of tofu.

According to a first aspect of the present invention, there is provided a tofu press, comprising: a tray for receiving tofu therein; a pressure member for applying pressure to the tofu within the tray; and a toggle latch releasably coupleable between the tray and the pressure member, the toggle latch comprising: an arm (120) pivotably connected at a first end to one of the tray (20) and the pressure member (80), wherein the arm (120) comprises a second end that is configured for manipulation by a user; a latch member (150) connected to the other of the tray (20) and the pressure member (80); and a linkage (140) connected to an intermediate portion of the arm (120) that is located between the first and second ends of the arm (120), wherein the linkage is releasably connectable to the latch member (150); and wherein the toggle latch (120,140,150) is configured such that, with the arm (120) in a first position, the linkage (140) is releasably connectable to the latch member (150), and rotational movement of the arm (120) from the first position to a second position causes a tension in the linkage (140) such that release from the latch member (150) is prohibited, and the tension in the linkage (140) urges the pressure member (80) and the tray (20) toward each other, thereby applying pressure to the tofu (30) within the tray (20).

In this way, coupling of the toggle latch between the tray and the pressure member causes pressure to be exerted on the tofu within the tray, by virtue of the pressure member.

The toggle latch may be further configured such that rotational movement of the arm from the second position to a third position between the first and second positions causes the tension in the linkage to increase such that the linkage substantially maintains the arm in the second position.

That is to say, once the linkage is connected to the latch member, rotational movement of the arm from the first position to the third position gradually increases tension in the linkage, and rotational movement of the arm from the third position to the second position gradually decreases tension in the linkage. In some embodiments the tension in the linkage in the second position is within 20%, 10% and/or 5% of the tension in the linkage in the third position. In some embodiments the tension in the linkage in the first position (when connected to the latch member) is less than 20%, 10% and/or 5% of the tension in the linkage in the third position.

The linkage may comprise an elastic material. In this way, the linkage may stretch. This may allow a gradual and/or smooth increase in pressure to the tofu within the tray. In particular, the linkage may substantially follow Hooke's Law, for instance over extensions experienced within normal operation of the tofu press. The elastic material may be silicone, rubber, synthetic rubber and/or any other form of elastic material.

Alternatively, the linkage may comprise a substantially inelastic material, such as metal and/or a plastics material, as in conventional toggle latches.

In some embodiments, the linkage may be extensible. For instance, a dimension of the linkage may be predetermined by a user. In some embodiments, the linkage may be exchangeable, such that linkages of various different dimensions may be used, as selected by a user.

The linkage may pivotally connect to the arm. Alternatively, the linkage may be fixedly connected to the arm.

The linkage may be substantially flexible. In this way, relative movement of a part of the linkage spaced from the arm, with respect to the arm, may be achieved via deformation of the linkage, at least.

The arm may be a class 2 lever. That is, effort is applied on one side of a resistance and the fulcrum is located on the other side. For instance, the arm may have a first end that is pivotally attached to the tray and/or pressure member, a second end opposing the first end that is configured for manipulation by a user, and an intermediate portion between the first and second ends to which the linkage is connected. Alternatively, the arm may be a class 1 or class 3 lever.

The arm may have a substantially L-shape profile. For instance, a first end of the L may be pivotally attached to the tray and/or pressure member, a second end of the L may be configured for manipulation by a user, and the linkage may be connected to the angle/joint of the L.

The tofu press may comprise a plurality of latch members selectable for the releasable connection of the linkage thereto. In this way, an amount of pressure to be applied to tofu within the tray can be selected by a user. The latch members may be a strike, catch plate, hook and/or any other means for allowing the linkage to releasably connect thereto.

The tofu press may comprise a plurality of toggle latches. In this way, an even pressure may be applied to the tofu within the tray. In particular, the toggle latches may be spaced around a perimeter of the tofu press, for instance, evenly spaced.

The pressure member may be a pressure plate. The pressure member may comprise an exterior profile that corresponds to an interior profile of the tray. In this way, pressure may be applied uniformly across tofu within the tray. Additionally, convenient storage of the tofu press may be permitted by a compact size.

The tray may have a liquid permeable surface configured to permit passage of liquid therethrough. For instance, the tray may comprise a mesh, net, hole, array of holes, and or any other liquid permeable surface. The liquid permeable surface may be configured to permit passage of water and/or soy whey therethrough, and may be further configured to substantially prevent passage of tofu therethrough. Alternatively or additionally, the pressure member may have a surface for permitting passage of liquid therethrough.

The tray may comprise an inner tray comprising the surface configured to permit passage of liquid therethrough, and an outer tray for collecting liquid having passed through the surface of the inner tray.

The inner tray may comprise legs for spacing an exterior of the inner tray from an interior of the outer tray, thereby allowing the inner tray to be spaced from liquid having passed through the surface of the inner tray into the outer tray. Alternatively or additionally, the outer tray may comprise protuberances on an inner surface thereof, for a similar purpose.

The toggle latch may be releasably connectable between the pressure member and the inner and/or outer tray. In this way, the tofu press may be used without the need for the outer tray, it may be used with the outer tray spaced below the inner tray to allow observation of liquid passing out of the inner tray, and/or it may be used such that the outer tray cannot be removed from the inner tray. This may improve functionality, prevent accidental spillage and/or improve effective storage when not in use.

The tofu press may comprise an opaque and/or a transparent material. The tofu press may comprise glass, metal and/or a plastics material.

According to a second aspect of the present invention, there is provided a method of removing liquid from tofu, comprising the steps of: providing a tofu press according to the first aspect of the present invention; placing tofu within the tray; placing the pressure member on the tofu within the tray; coupling the toggle latch between the tray and the pressure member such that pressure is applied to the tofu within the tray by the pressure member; removing liquid from the tray; and removing tofu from the tray, the tofu having a reduced liquid content in response to the pressure applied by the pressure member.

Other foodstuffs may be pressed within the tofu press to achieve similar and/or substantially different results.

The above and other characteristics, features and advantages of the present invention will become apparent from the following detailed description, taken in conjunction with the accompanying drawings, which illustrate, by way of example, the principles of the invention.

The reference figures quoted below refer to the attached drawings.
Figure 1 is an exploded perspective view of a tofu press.
Figure 2 is a cross-sectional view of the tofu press of figure 1, with the toggle latches uncoupled.
Figure 3 is a cross-sectional view of the tofu press of figures 1 and 2, with the toggle latches coupled.
Figure 4 is a perspective view of the tofu press of figures 1 to 3, with the toggle latches coupled.

The present invention will be described with respect to certain drawings but the invention is not limited thereto but only by the claims. The drawings described are only schematic and are non-limiting. Each drawing may not include all of the features of the invention and therefore should not necessarily be considered to be an embodiment of the invention. In the drawings, the size of some of the elements may be exaggerated and not drawn to scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that operation is capable in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that operation is capable in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "an embodiment" or "an aspect" means that a particular feature, structure or characteristic described in connection with the embodiment or aspect is included in at least one embodiment or aspect of the present invention. Thus, appearances of the phrases "in one embodiment", "in an embodiment", or "in an aspect" in various places throughout this specification are not necessarily all referring to the same embodiment or aspect, but may refer to different embodiments or aspects. Furthermore, the particular features, structures or characteristics of any embodiment or aspect of the invention may be combined in any suitable manner, as would be apparent to one of ordinary skill in the art from this disclosure, in one or more embodiments or aspects.

Similarly, it should be appreciated that in the description various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Moreover, the description of any individual drawing or aspect should not necessarily be considered to be an embodiment of the invention. Rather, as the following claims reflect, inventive aspects lie in fewer than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some features included in other embodiments, combinations of features of different embodiments are meant to be within the scope of the invention, and form yet further embodiments, as will be understood by those skilled in the art. For example, in the following claims, any of the claimed embodiments can be used in any combination as defined in the claims.

In the description provided herein, numerous specific details are set forth. However, it is understood that embodiments of the invention may be practised without these specific details. In other instances, well-known methods, structures and techniques have not been shown in detail in order not to obscure an understanding of this description.

In the discussion of the invention, unless stated to the contrary, the disclosure of alternative values for the upper or lower limit of the permitted range of a parameter, coupled with an indication that one of said values is more highly preferred than the other, is to be construed as an implied statement that each intermediate value of said parameter, lying between the more preferred and the less preferred of said alternatives, is itself preferred to said less preferred value and also to each value lying between said less preferred value and said intermediate value.

The use of the term "at least one" may mean only one in certain circumstances.

The principles of the invention will now be described by a detailed description of at least one drawing relating to exemplary features of the invention. It is clear that other arrangements can be configured according to the knowledge of persons skilled in the art without departing from the underlying concept or technical teaching of the invention, the invention being limited only by the terms of the appended claims.

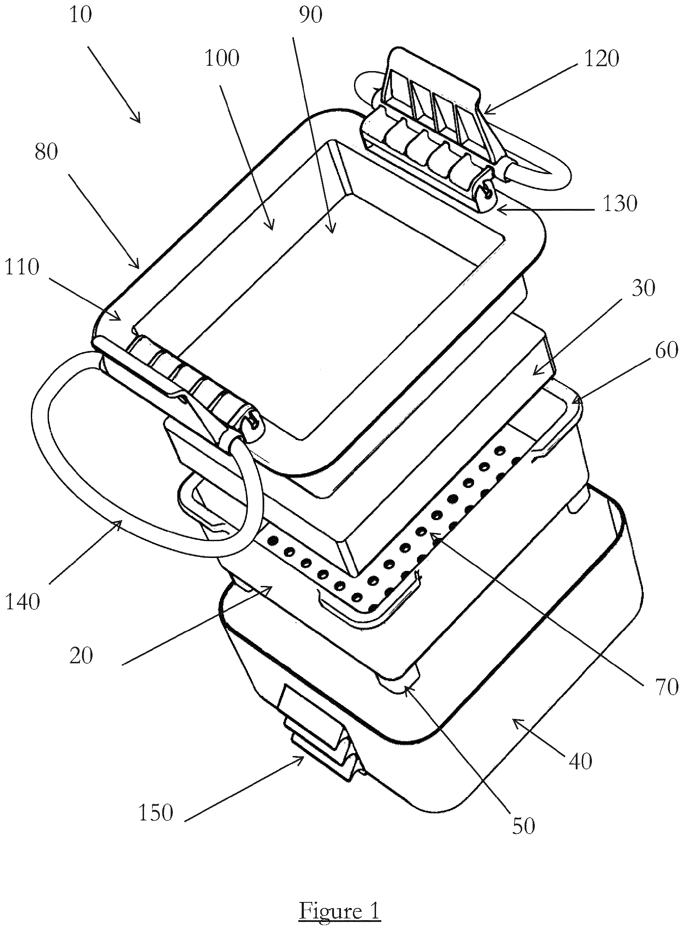

Figure 1 is an exploded perspective view of a tofu press 10. The tofu press 10 comprises an inner tray 20 for receiving tofu 30 therein, and an outer tray 40 for receiving the inner tray 20 therein. Both the inner tray and the outer tray are substantially cuboidal in form. The inner tray 20 has an exterior profile smaller than the interior profile of the outer tray 40, and includes four legs 50, for raising the inner tray from the bottom of the outer tray 40, and four side projections 60 for spacing the inner tray 20 from the interior sides of the outer tray 40. The inner tray 20 also includes an array of holes 70 in a lower surface thereof to allow passage of liquid from the interior of the inner tray 20 to the outer tray 40.

The tofu press 10 also comprises a pressure member 80 having a pressure plate 90 and side walls 100 that form an exterior profile that corresponds to an interior profile of the inner tray 20. Attached to an upper end of the side walls 100 is a lip 110 that prevents over-insertion of the pressure member 80 into the inner tray 20 or the outer tray 40.

Located on the lip 110 are two L-shape arms 120, pivotally connected to the lip via mounting brackets 130 at a respective end of each arm 120. The arms 120 are located on opposing sides of the tofu press 10. At an opposing end of each arm 120 to the mounting brackets 130 are grips for a user to rotate the arms 120. Passing through a central hole in each arm 120 is an elastic band member 140, which is configured and arranged to be hooked onto a selected one of three catch plates 150, as will be described with reference to the following figures. The elastic band members are shown with a circular cross section; however flat-, rectangular- and/or ribbon-shape cross-sections are also envisaged, amongst others.

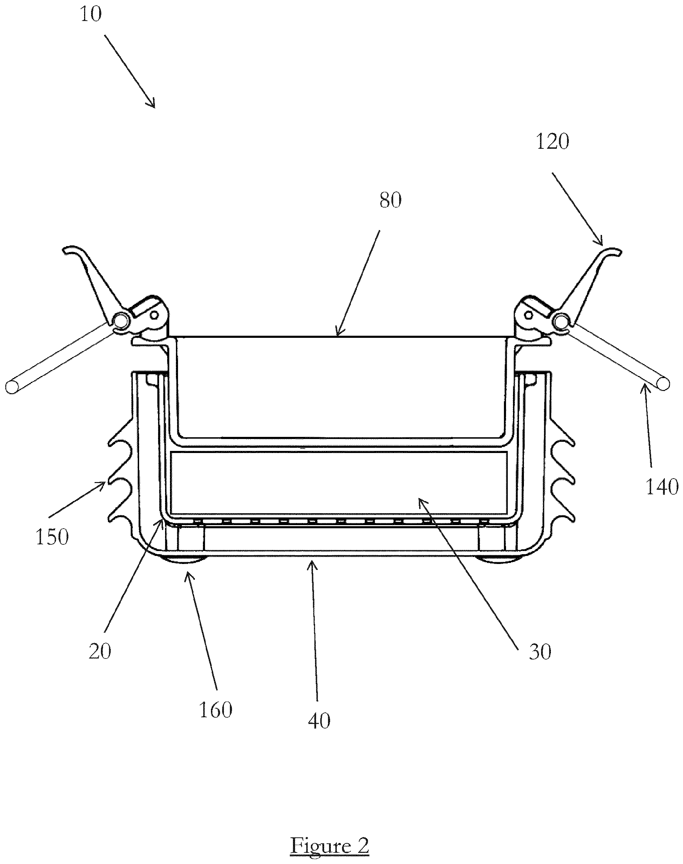

Figure 2 is a cross-sectional view of the tofu press 10, with the arms 120 in a first rotational position. In this rotational position, the elastic band members 140 may be hooked onto a selective one of the catch plates 150. Feet 160 can be seen on the underside of the outer tray 40, to prevent the outer tray 40 from slipping on a work surface when in use. In this arrangement, four feet 160 are present, each at a respective corner of the outer tray 40.

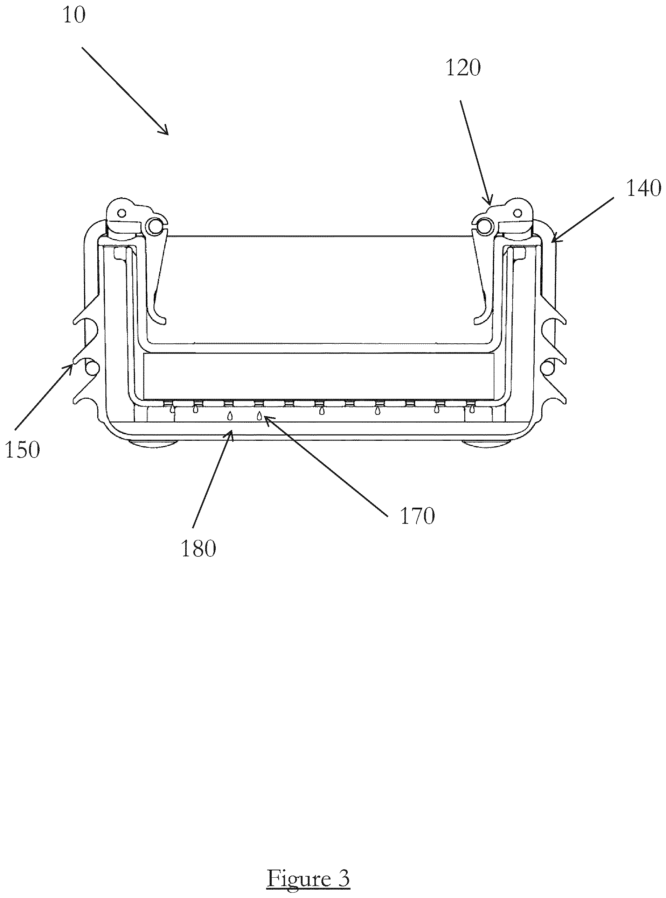

Figure 3 is a cross-sectional view of the tofu press 10, after the elastic band members 140 have been coupled to the respective middle catch plate 150 in each series of three catch plates 150. In addition, the arms 120 have each been moved to a second position in which the elastic band members 140 are stretched over and around the lip 110 of the pressure member 80, thereby applying pressure to the tofu 30 within the inner tray 20. As the pressure is applied, whey 170 is pushed out of the tofu 30, passing through the holes 70 in the inner tray to collect 180 in the outer tray 40, leaving tofu behind within the inner tray 20.

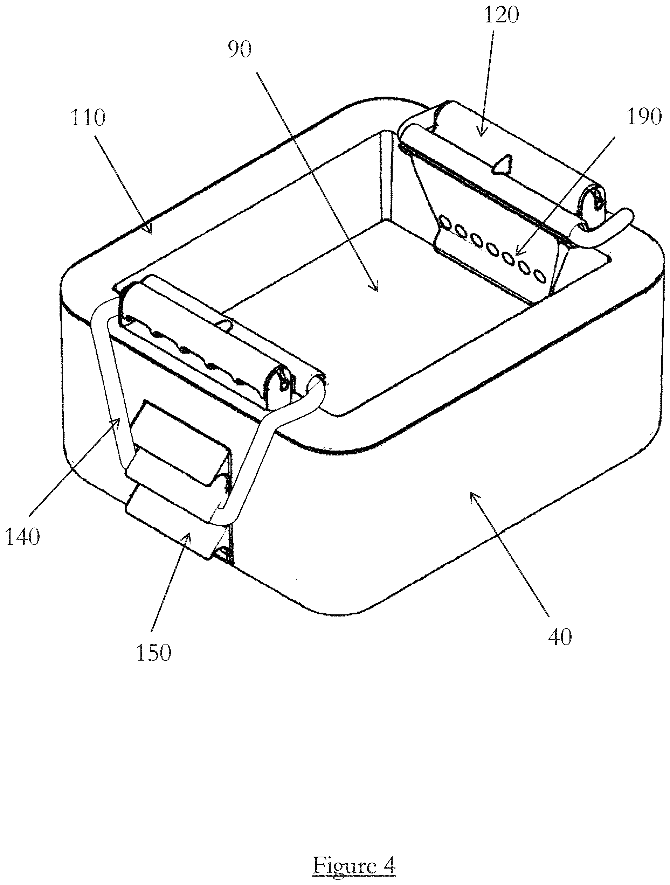

Figure 4 is a perspective view of the tofu press 10, shown with the arms 120 in the second position of figure 3. The arms 120 include grips 190 for use by a user.

## Claims

1. A tofu press (10), comprising:
a tray (20) for receiving tofu (30) therein; and
a pressure member (80) for applying pressure to the tofu (30) within the tray (20);
**characterized by** a toggle latch (120, 140, 150) releasably coupleable between the tray (20) and the pressure member (80), the toggle latch (120, 140, 150) comprising:
an arm (120) pivotally connected at a first end to one of the tray (20) and the pressure member (80), wherein the arm (120) comprises a second end that is configured for manipulation by a user;
a latch member (150) connected to the other of the tray (20) and the pressure member (80); and
a linkage (140) connected to an intermediate portion of the arm (120) that is located between the first and second ends of the arm (120), wherein the linkage (140) is releasably connectable to the latch member (150); and
wherein the toggle latch (120, 140, 150) is configured such that:
with the arm (120) in a first position, the linkage (140) is releasably connectable to the latch member (150); and
rotational movement of the arm (120) from the first position to a second position causes a tension in the linkage (140) such that release from the latch member (150) is prohibited, and the tension in the linkage (140) urges the pressure member (80) and the tray (20) toward each other, thereby applying pressure to the tofu (30) within the tray (20).

2. The tofu press (10) of claim 1, wherein the toggle latch (120, 140, 150) is further configured such that rotational movement of the arm (120) from the second position to a third position between the first and second positions causes the tension in the linkage (140) to increase such that the linkage (140) substantially maintains the arm (120) in the second position.

3. The tofu press (10) of any preceding claim, wherein the linkage (140) comprises an elastic material.

4. The tofu press (10) of any preceding claim, wherein the linkage (140) is pivotally connected to the arm (120).

5. The tofu press (10) of any preceding claim, wherein the arm (120) is a class 2 lever.

6. The tofu press (10) of any preceding claim, wherein the arm (120) has a substantially L-shape profile.

7. The tofu press (10) of any preceding claim, comprising a plurality of latch members (150) selectable for the releasable connection of the linkage (140) thereto.

8. The tofu press (10) of any preceding claim, comprising a plurality of toggle latches (120, 140, 150).

9. The tofu press (10) of any preceding claim, wherein the tray (20) comprises a liquid permeable surface configured to permit passage of liquid (170) therethrough.

10. The tofu press (10) of claim 9, wherein the tray (20) comprises an inner tray (20) comprising the surface configured to permit passage of liquid (170) therethrough, and an outer tray (40) for collecting liquid (180) having passed through the surface of the inner tray.

11. A method of removing liquid (170) from tofu (30), comprising the steps of:
providing a tofu press (10) according to any preceding claim;
placing tofu (30) within the tray (20);
placing the pressure member (80) on the tofu (30) within the tray (20);
coupling the toggle latch (120, 140, 150) between the tray (20) and the pressure member (80) such that pressure is applied to the tofu (30) within the tray (20) by the pressure member (80);
removing liquid (170) from the tray (20); and
removing tofu (30) from the tray (20), the tofu (30) having a reduced liquid content in response to the pressure applied by the pressure member (80).

## Patentansprüche

1. Tofupresse (10) umfassend:
eine Schale (20) zur Aufnahme von Tofu (30); und
ein Druckglied (80) zum Anlegen von Druck auf den Tofu (30) in der Schale (20);
**dadurch gekennzeichnet, dass** ein Riegelspannverschluss (120, 140, 150) lösbar koppelbar zwischen der Schale (20) und dem Druckglied (80) ist, der Riegelspannverschluss (120, 140, 150) umfassend:
einen Arm (120) an einem ersten Ende mit einem der Schale (20) und dem Druckglied (80) schwenkbar verbunden, wobei der Arm (120) ein zweites Ende umfasst, das zur Manipulation durch einen Benutzer ausgebildet ist;
ein Verriegelungselement (150) verbunden mit dem anderen der Schale (20) und dem Druckglied (80); und
ein Verbindungsteil (140) verbunden mit einem mittleren Teil des Arms (120), das zwischen dem ersten und zweiten Ende des Arms (120) angeordnet ist, wobei das Verbindungsteil (140) lösbar mit dem Verriegelungselement (150) verbunden werden kann; und
wobei der Riegelspannverschluss (120, 140, 150) so ausgebildet ist, dass:
mit dem Arm (120) in einer ersten Position, das Verbindungsteil (140) lösbar mit dem Verriegelungselement (150) verbunden werden kann; und
eine Rotationsbewegung des Arms (120) von einer ersten Position in eine zweite Position eine Spannung in dem Verbindungsteils (140) bewirkt, so dass das Lösen des Verriegelungselements (150) verhindert wird, und die Spannung in dem Verbindungsteil (140) das Druckglied (80) und die Schale (20) aufeinander zu zwingt, dabei Druck auf den Tofu (30) in der Schale (20) ausübend.

2. Tofupresse (10) nach Anspruch 1, wobei der Riegelspannverschluss (120, 140, 150) weiter so ausgebildet ist, dass eine Rotationsbewegung des Arms (120) von der zweiten Position in eine dritte Position zwischen der ersten und der zweiten Position dazu führt, dass die Spannung in dem Verbindungsteil (140) zunimmt, so dass das Verbindungsteil (140) den Arm (120) im Wesentlichen in der zweiten Position hält.

3. Tofupresse (10) nach einem der vorgehenden Ansprüche, wobei das Verbindungsteil (140) elastisches Material umfasst.

4. Tofupresse (10) nach einem der vorgehenden Ansprüche, wobei das Verbindungsteil (140) schwenkbar mit dem Arm (120) verbunden ist.

5. Tofupresse (10) nach einem der vorgehenden Ansprüche, wobei der Arm (120) ein Hebel zweiter Art ist.

6. Tofupresse (10) nach einem der vorgehenden Ansprüche, wobei der Arm (120) ein im Wesentlichen L-förmiges Profil aufweist.

7. Tofupresse (10) nach einem der vorgehenden Ansprüche, umfassend eine Vielzahl an Verriegelungselementen (150) auswählbar zur lösbaren Verbindung des Verbindungsteils (140) daran.

8. Tofupresse (10) nach einem der vorgehenden Ansprüche, umfassend eine Vielzahl an Riegelspannverschlüssen (120, 140, 150).

9. Tofupresse (10) nach einem der vorgehenden Ansprüche, wobei die Schale (20) eine flüssigkeitsdurchlässige Oberfläche umfasst, die ausgebildet ist, um den Durchtritt von Flüssigkeit (170) zuzulassen.

10. Tofupresse (10) nach Anspruch 9, wobei die Schale (20) eine innere Schale (20) umfasst, die eine Oberfläche umfasst, die den Durchtritt von Flüssigkeit (170) zulässt, und eine äußere Schale (40) zum Sammeln der Flüssigkeit (180), die durch die Oberfläche der inneren Schale durchgetreten ist.

11. Verfahren zum Entfernen von Flüssigkeit (170) aus Tofu (30), umfassend die Schritte:
Bereitstellen eine Tofupresse (10) nach einem der vorgehenden Ansprüche;
Platzieren von Tofu (30) in der Schale (20);
Platzieren des Druckglieds (80) auf dem Tofu (30) in der Schale (20);
Koppeln des Riegelspannverschlusses (120, 140, 150) zwischen der Schale (20) und dem Druckglied (80), so dass an den Tofu (30) in der Schale (20) durch das Druckglied (80) Druck angelegt wird;
Entfernen von Flüssigkeit (170) aus der Schale (20); und
Entfernen des Tofu (30) aus der Schale (20); wobei der Tofu (30) in Reaktion auf den Druck angelegt durch das Druckglied (80) einen reduzierten Flüssigkeitsgehalt aufweist.

## Revendications

1. Presse de tofu (10), comprenant :
un plateau (20) pour recevoir du tofu (30) dans celui-ci ; et
un élément de pression (80) pour appliquer une pression sur le tofu (30) dans le plateau (20) ; **caractérisée par** un verrou à genouillère (120, 140, 150) apte à être couplé de manière libérable entre le plateau (20) et l'élément de pression (80), le verrou à genouillère (120, 140, 150) comprenant :
un bras (120) relié de manière pivotante, au niveau d'une extrémité, à l'un parmi le plateau (20) et l'élément de pression (80), le bras (120) comprenant une seconde extrémité qui est configurée pour une manipulation par un utilisateur ;
un élément verrou (150) relié à l'autre parmi le plateau (20) et l'élément de pression (80) ; et
un lien (140) relié à une partie intermédiaire du bras (120) qui se situe entre les première et seconde extrémités du bras (120), le lien (140) étant apte à être relié de manière libérable à l'élément verrou (150) ; et
le verrou à genouillère (120, 140, 150) étant configuré de telle sorte que :
avec le bras (120) dans une première position, le lien (140) est apte à être relié de manière libérable à l'élément verrou (150) ; et
un mouvement de rotation du bras (120) de la première position à une deuxième position provoque une tension dans le lien (140) de telle sorte qu'une libération de l'élément verrou (150) est interdite, et la tension dans le lien (140) sollicite l'élément de pression (80) et le plateau (20) l'un vers l'autre, appliquant ainsi une pression sur le tofu (30) dans le plateau (20).

2. Presse de tofu (10) selon la revendication 1, dans laquelle le verrou à genouillère (120, 140, 150) est en outre configuré de telle sorte qu'un mouvement de rotation du bras (120) de la deuxième position à une troisième position entre les première et deuxième positions amène la tension dans le lien (140) à augmenter, de telle sorte que le lien (140) maintient sensiblement le bras (120) dans la deuxième position.

3. Presse de tofu (10) selon l'une quelconque des revendications précédentes, dans laquelle le lien (140) comprend un matériau élastique.

4. Presse de tofu (10) selon l'une quelconque des revendications précédentes, dans laquelle le lien (140) est relié de manière pivotante au bras (120).

5. Presse de tofu (10) selon l'une quelconque des revendications précédentes, dans laquelle le bras (120) est un levier de classe 2.

6. Presse de tofu (10) selon l'une quelconque des revendications précédentes, dans laquelle le bras (120) a un profil sensiblement en forme de L.

7. Presse de tofu (10) selon l'une quelconque des revendications précédentes, comprenant une pluralité d'éléments verrous (150) aptes à être sélectionnés pour la liaison amovible du lien (140) à ceux-ci.

8. Presse de tofu (10) selon l'une quelconque des revendications précédentes, comprenant une pluralité de verrous à genouillère (120, 140, 150).

9. Presse de tofu (10) selon l'une quelconque des revendications précédentes, dans laquelle le plateau (20) comprend une surface perméable aux liquides, configurée pour permettre le passage de liquide (170) à travers celle-ci.

10. Presse de tofu (10) selon la revendication 9, dans laquelle le plateau (20) comprend un plateau interne (20) comprenant la surface configurée pour permettre le passage de liquide (170) à travers celle-ci, et un plateau externe (40) pour collecter du liquide (180) ayant traversé la surface du plateau interne.

11. Procédé d'élimination de liquide (170) de tofu (30), comprenant les étapes :
disposer une presse de tofu (10) selon l'une quelconque des revendications précédentes ;
placer le tofu (30) dans le plateau (20) ;
placer l'élément de pression (80) sur le tofu (30) dans le plateau (20) ;
coupler le verrou à genouillère (120, 140, 150) entre le plateau (20) et l'élément de pression (80) de telle sorte qu'une pression est appliquée sur le tofu (30) dans le plateau (20) par l'élément de pression (80) ;
éliminer le liquide (170) du plateau (20) ; et
retirer le tofu (30) du plateau (20), le tofu (30) ayant une teneur en liquide réduite en réponse à la pression appliquée par l'élément de pression (80).
